# EUROPEAN PATENT APPLICATION

(11) **EP 1 395 027 A1**
(43) Date of publication of application: **03.03.2004**
(21) Application number: 02019247.2
(22) Date of filing: 27.08.2002
(51) Int. Cl.: H04M 7/00, H04Q 3/00, H04M 3/493, H04L 29/12

(54) **Communications links by means of a telecommunications web site**

(71) Applicant: Web. De AG, 76227 Karlsruhe (DE)
(72) Inventor: Hensing, Hanno, D-69121 Heidelberg (DE)
(74) Representative: Schnekenbühl, Robert Matthias L.

(57) **Abstract**

Method for establishing a communications link between a first end user unit and a second end user unit comprising the steps of communicating from the first end user unit to a first telecommunications web site first TCW-data, the first TCW-data activating the first telecommunications web site determining a first communications link unit by the first telecommunications web site, the first communications link unit providing communications links, and establishing a communications link between the first end user unit and the second end user unit via the first communications link unit.

## Description

### Field of the Invention

In general, the present invention relates to a communications link between end user units in a communications environment on the basis of so-called "call-by-call" communications links. Particularly, the present invention relates to the establishment of a "call-by-call" communications link between at least two end user units at least partially under control of a so-called telecommunications web site.

### Background of the Invention

In traditional telephone networks which do not service "call-by-call" communications links all telephones of a common telephone network are unchangeably associated with the provider of that telephone network. For establishing a communications link between a calling telephone and a telephone to be called, a telephone number identifying the telephone to be called is input into the calling telephone and transmitted via the telephone network to switching units and devices in the network.

On the basis of the telephone number of the telephone to be called, the switching units and devices establish a telephone connection (a communications link) between the calling telephone and the telephone to be called within that network.

Here, one drawback is the fact that telephones of such a traditional telephone network are operated according to the network characteristics given by the respective network provider. For example, a user of such a traditional telephone network has to accept the telephone costs of the network provider, has to fulfill the technical requirements of the network (e.g. telephones according to a specific standard defining, inter alia, plug-socket connections, transmission rates, bandwidths, signaling and the like), is limited to services of the network provider (e.g. conventional telephone calls at a low transmission rate, data transmissions at transmission rates defined by the network provider), and is limited to communications links in the telephone network unless the service provider allows for communications links for specific other networks (e.g. international telephone calls but not communications to computer based networks).

In order to improve the service quality of telephone networks so-called "call-by-call" telephone calls are increasingly used in PSTN based telephone networks. Here, a telephone is still associated with a telephone network of a specific network provider but is allowed to establish communications links provided by a different service provider for that network. For establishing such communications links via a service provider, a telephone connection between a calling telephone and the service provider is established by transmitting a telephone number identifying the service provider and a telephone connection between the service provider and a telephone to be called on the basis of a telephone number identifying the telephone to be called.

In particular, the calling telephone transmits the service provider telephone number to the network provider which connects the calling telephone to the service provider and subsequently transmits the telephone number of the telephone to be called via the established telephone connection to the service provider thereto which in response establishes a telephone connection to the telephone to be called.

The transmission of a service provider telephone number can be initiated by manually inputting a service provider telephone number into a telephone or by automatically transmitting a service provider telephone number under control of a calling telephone or a so-called pre-dial add-on hard/software component in response to an input of a telephone number of a telephone to be called.

Although "call-by-call" services provide for some enhancement in telephone communications, there are still a plurality of problems and constraints. For example, the case of manually inputting a service provider telephone number requires additional user-telephone interaction which is time consuming and requires the user's concentration since most of the service provider telephone numbers include many digits. As a result, many telephone users will avoid the required additional interaction and, thus, not use "call-by-call" services.

This could be avoided by approaches wherein a service provider telephone number is automatically transmitted. Manually inputting a service provider telephone number leaves the option to choose different service providers, for example in view of telephone costs or transmission rates. In contrast thereto, an automatic transmission of service provider telephone numbers is usually limited to a specific service provider telephone number. As a result, a user employing an automatic service provider transmission is virtually fixedly associated with that respective service provider resulting in a situation comparable to the above-described traditional telephone network.

Moreover, common "call-by-call" services are not provided in mobile telephone networks (e.g. GSM, UMTS networks). The same applies for communications performed via a computer network (e.g. the Internet) wherein a communications link to computer network service providers can be established via a "call-by-call" telephone connection while communications links via the computer network are serviced by the computer network service provider a calling telephone is associated with. The latter problem could be overcome by service contracts with different computer network service providers. In practice this possibility is rarely used since it is not user friendly because for each computer network communications link a desired computer network service provider has to be chosen. Further, respective hardware and software have to be installed by a user which is often a rather complicated and mostly connected with costs and therefore often avoided.

### Object of the Invention

In general, the object of the present invention is to overcome the problems and constraints of known approaches proposed for "call-by-call" services. In particular, the object of the present invention is to provide a solution offering "call-by-call" services in a user friendly manner, requiring no or a minimum additional hardware and software components and being not limited to specific communications environments.

### Short description of the invention

The above object is obtained by means of a method for establishing a communications link between a first end user unit and a second end user unit. The method according to the present invention comprised communicating from the first end user unit to a first telecommunications web site first TCW-data, the first TCW-data activating the first telecommunications web site, determining a first communications link unit by the first telecommunications web site, the first communications link unit providing communications links, and establishing a communications link between the first end user unit and the second end user unit via the first communications link unit.

Further, the above object is obtained by an end user unit for communicating with a receiving end user unit, a telecommunications web site for providing a communications link between a first end user unit the telecommunications web site is associated to and a second end user unit, software program products and a communications environment as defined in the accompanying claims.

Further features and advantaged are defined in the respective dependent claims.

### Short description of the figures

In the following description of preferred embodiments of the present invention it is referred to the accompanying drawings wherein:
- Fig. 1 to 6: show different embodiments according to the present invention, and
- Fig. 7: schematically illustrates an embodiment of an end user unit according to the present invention,
wherein reference numerals being numbers are cited in brackets while reference numerals being letters are referred without brackets.

### Description of preferred embodiments

For carrying out the present invention, at least an end user unit from which a desired communications link is intended to originate, a telecommunications web site is associated with the end user unit and an end user unit to which the desired communications link is intended are used.

End user units as used herein relate to any device, unit or means, which can be used for communications. A preferred end user unit is a telephone, a keyboard, a computer terminal, a mobile phone, a fax, a telex, a mail pigeon, an ordinary letter, a scanner, a PSTN device, a 3G-wireless communications device, especially a UMTS device, etc.

The end user unit of the present invention is not limited to a particular communications unit/device or any communications network. Rather, communications by means of an end user unit can occur via any communications network such as regular telephone networks, mobile communications networks, computer networks, radio transmission networks, the Internet, etc. Further, an end user unit is not restricted to single devices or means, but can also include two and more units, devices, means and the like providing data/information sending and/or receiving capabilities for communications purposes, e.g., an ordinary letter and a scanner.

The end user unit is adapted to perform network-based communications. Thus, the end user unit is connectable to a network or rather able to communicate with a network. A network in this context is a physical transport medium in which data and/or signals can be fed. For example, an ordinary letter itself is adapted to perform network-based communication when scanned or digitized and supplied into a TCP/IP network.

A communications environment is a communications system comprising more than one component. Thus, a communications environment or communications system might for instance comprise a telephone, a PSTN-network, a gateway to the internet, etc.

The terms "web site" and "web page" as used herein refer to sites and sub-sites associated thereto which can be uniquely addressed by means of a single address, like a telephone number or an IP address, an URL, etc. It is also advantageous to use such a "web site" in a 3G-communication environment, especially an UMTS-environment. Preferably, such a web site is a site known from the Internet with a specific URL, which can be accessed by Internet visitors, and by the web site host. The web site host is the owner of the web site.

This web site can include one or more web pages. These web pages are part of the one web site. It should be noted that the terms "web site" and "web page" are not to be considered to limit the present invention to conventional web sites and webpages known from the Internet.

Thus, the web site and its web page(s), respectively, can be accessed by establishing a communications link from an end user unit independently of the network(s) employed.

In particular a telecommunications web site is adapted to provide, upon an access by an end user unit, for direct private communications between the accessing end user unit and an end user unit to which a communications link is to be established.

A telecommunications web site is assigned to or personalized for or corresponding to a specific person or entity. Such a specific entity can be a person, a company or any other entity. Preferably, the specific entity is a single entity, e.g., a specific user or owner (e.g., a single person, a company, a unit of a company, etc.) of the telecommunications web site, a specific address, a specific location, a specific end user unit and the like. Thus, an end user unit of a user to whom a telecommunications web site is associated to will be also associated with that telecommunications web site if used for accessing the same. Therefore, the specific entity to which a telecommunications web site is associated to and an end user unit employed by the specific entity can be considered as synonym for the period of time the specific entity operates its end user unit to access its telecommunications web site.

A telecommunications web site serves as a general purpose communications interface for end user units and addressed entities which can include or can be an end user unit itself. As an illustration, the telecommunications web site can be considered as a communications "window", similar to a window of an office counter, where communicating parties are "sitting" on opposite sides of the window and can communicate through speech holes in the window, via an intercom, by gestures, by facial expressions, showing papers with information written thereon, passing documents through a hatch and so on. Comparable thereto, the telecommunications web site according to the present invention allows communications in a plurality of modes and by a plurality of types/formats of data/information.

An advantage of the TCW is that communications can be provided and established multimedial, i.e. using more than one medium. These different media can be used by using different end user units or different networks like for instance PSTN, IP-based networks or UMTS networks.

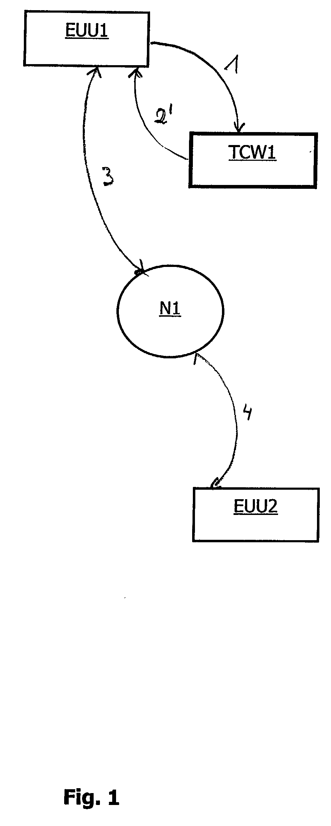

In the embodiment illustrated in Fig. 1, a communications link is to be established between a first end user unit EUU1 and a second end user unit EUU2.

For establishing the desired communications link, a first telecommunications web site TCW1 associated to the first end user unit EUU1 is activated or "opened". For that purpose, first so-called TCW-data are communicated (1) by the first end user unit EUU1 to the first telecommunications web site TCW1. For example, this can accomplish by connecting to the first telecommunications web site TCW1 utilizing a so-called "#0800-service" in a telephone network providing telephone calls free of charge for the calling party.

TCW-data as used herein to refer to data/information required to allow an access of the first telecommunications web site TCW1 by means of the first end user unit EUU1 and data/information required by the first telecommunications web site TCW1 to at least initiate an establishment of the desired communications link CL.

Data/information for accessing the first telecommunications web site TCW1 include data characterizing the first telecommunications web site TCW1 and, as an option, for security reasons, data identifying and/or authorizing the first end user unit EUU1 or its user, respectively, as a party for which an access of the first telecommunications web site TCW1 is allowed.

Data/information suitable for security purposes include a so-called caller recognition of a user of the first end user unit EUU1 for example by means of PIN codes, TAN codes, voice recognition and/or other biometrical data recognition methods/devices, measures to identify the end user unit EUU1 for example by means of a specific unit number or code and the like.

Further, the TCW-data communicated by the first end user unit EUU1 can include data/information characterizing properties desired for the communications link to the second end user unit EUU2. As an example, this option include data indicating a desired network (e.g. telephone/computer network of provider A or B), technical properties of the desired communications link (data rate, communications link cost, communications link related services, etc.) and the like.

To initiate a communication with the second end user unit EUU2, the first end user unit EUU1 transmits (1) first TCW-data to its first telecommunications web site TCW1, wherein the first TCW-data serve to actually access the first telecommunications web site TCW1 such that the first telecommunications web site TCW1 is activated/opened for the first end user unit EUU1. Further, the first TCW-data include data being indicative of the fact that the first end user unit EUU1 wants to establish a communications link to the second end user unit EUU2.

For establishing a communications link, the first telecommunications web site TCW1 needs information identifying the second end user unit. Such information can be provided by the first end user unit EUU1 in form of a telephone number, a URL and the like or the name of a user of the second end user unit EUU2. In the latter case, the first telecommunications web site TCW1 can, for example, retrieve a telephone number or URL of the second end user unit EUU2 or its user, respectively, from a respective data set personalized for the first end user unit EUU1 or from a public telephone book.

Then, the first telecommunications web site TCW1 selects a suitable and/or desired communications environment or network. For selecting a suitable communications environment or network, the first telecommunications web site TCW1 can select an appropriate one in view of least-cost-routing, prevailing utilization, data rates, bandwidths, reliability, security and the like. For a desired communications environment or network, the first telecommunications web site TCW1 can select an appropriate one in view of information provided by the first end user unit EUU1 possibly included in its TCW-data (e.g. "establish a PSTN telephone network communications link" or "establish an internet communications link"), the type of device used as or within the first end user unit EUU1 (e.g. personal computer, stationary telephone, mobile telephone), the type of device usually or preferably used as or within the second end user unit EUU2, contracts with the communications environment or network provider or services for the first and/ or end user unit EUU1, EUU2, and the like.

Assuming a PSTN network or mobile network based communications link is to be established, the first telecommunications web site TCW1 selects a respective first communications link unit N1 such as a PSTN switching or a radio base station. Then, data/information characterizing the selected first communications link unit N1 are communicated (2') to the first end user unit EUU1.

In response to the data/information provided by the first telecommunications web site TCW1, the first end user unit EUU1 contacts (3) the selected first communications link unit N1 to initiate/establish a communications link (4) to the second end user unit EUU2. This can be accomplished, for example in the case of a telephone or a computer serving as the first end user unit EUU1, by means of a telephone number or URL.

Since the communications link to the second end user unit EUU2 is established from the first end user unit EUU1, the first telecommunications web site TCW1 does not necessarily need data/information necessary to actually establish the desired communications link to the second end user unit EUU2. Rather, the first telecommunications web site TCW1 needs information necessary to identify the second end user unit EUU2 in view of the selection of an appropriate communications link unit. Such information include, e.g., the type of the second end user unit EUU1, its geographical location and the like.

Independently of how the communications link between the first and second end user units EUU1, EUU2 is actually established, measures for charging costs related to the establishing of the desired communications link and its use to the first end user unit EUU1 are contemplated. Here, the first end user unit EUU1 appears as a calling party with respect to the first communications link unit N1. As common, communications link related costs will be charged to the first end user unit EUU1.

It is also possible that communications link related costs are charged from the first communications link unit N1 to the first telecommunications web site TCW1 which forwards the costs to the first end user unit EUU1 possibly with a service charge.

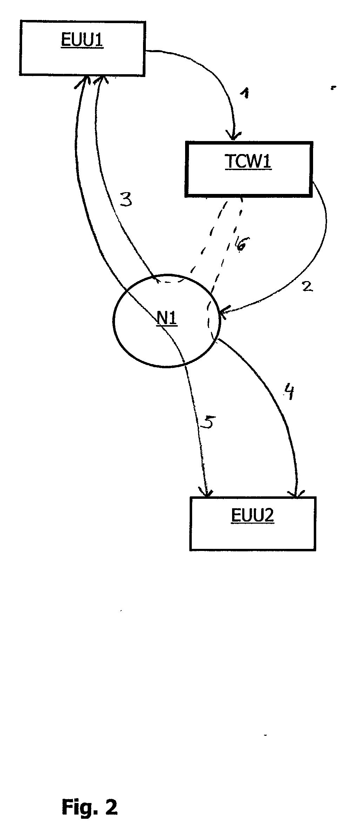

In the embodiment shown in Fig. 2, the first end user unit EUU1 wants to communicate with the second end user unit EUU2. As within the embodiment shown in Fig. 1, the first end user unit EUU1 transmits (1) first TCW-data to its first telecommunications web site TCW1, wherein the first TCW-data serve to actually access the first telecommunications web site TCW1 such that the first telecommunications web site TCW1 is activated/opened for the first end user unit EUU1. Further, the first TCW-data include data being indicative of the fact that the first end user unit EUU1 wants to establish a communications link with the second end user unit EUU2. Again, identification and authenticity measures can be carried out.

For establishing a communications link, the first telecommunications web site TCW1 needs information characterizing the second end user unit. Such information can be provided by the first end user unit EUU1 in form of a telephone number, a URL and the like or the name of a user of the second end user unit EUU2. In the latter case, the first telecommunications web site TCW1 can, for example, retrieve a telephone number or URL of the second end user unit EUU2 or its user, respectively, from a respective data set personalized for the first end user unit EUU1 or from a public telephone book or URL register.

Then, the first telecommunications web site TCW1 ***selects a*** suitable and/or desired communications environment or network. For selecting a suitable communications environment or network, the first telecommunications web site TCW1 can select an appropriate one in view of least-cost-routing, prevailing utilization, data rates, bandwidths, reliability, security and the like. For a desired communications environment or network, the first telecommunications web site TCW1 can select an appropriate one in view of information provided by the first end user unit EUU1 possibly included in its TCW-data (e.g. "establish a PSTN telephone network communications link" or "establish an internet communications link"), the type of device used as or within the first end user unit EUU1 (e.g. personal computer, stationary telephone, mobile telephone), the type of device usually or preferably used as or within the second end user unit EUU2, contracts with the communications environment or network provider or services for the first and/or end user unit EUU1, EUU2, and the like.

Assuming a PSTN network or mobile network based communications link is to be established, here the first telecommunications web site TCW1 contacts (2) a respective first communications link unit N1 such as a PSTN switching or a radio base station to initiate two telephone calls originating from that first communications link unit N1: one as communications link (3) to the first end user unit EUU1 and one as communications link (4) to the second end user unit EUU2. For establishing a communications link (5) actually connecting the first and second end user units EUU1, EUU2, it is possible that the first communications link unit N1 merges the two communications link (3, 4) to the first end user unit EUU1 and the second end user unit EUU2. In the case of telephone communications links, this can be accomplished comparable to conference call. Such a communications link establishment can be formed by the first communications link unit N1 by itself, for example on the basis of a respective data provided by the first telecommunications web site TCW1 indicating that the communications links (3, 4) outgoing from the first communications link unit N1 to the first and second end user units EUU1, EUU2 should be connected to form a connecting communications link (5).

Further, to actually establish a desired communications link between the first and second end user units EUU1, EUU2, it is possible that the two separate communications links (3, 4) originating from the first communications link unit N1 to the first and second end user units EUU1, EUU2 are connected via the first telecommunications web site TCW1. This is indicated in Fig. 1 by the dotted line (6). Here, the first telecommunications web site TCW1 can be considered as a party calling both the first end user unit EUU1 and the second end user unit EUU2 via the first communications link unit N1, wherein the first telecommunications web site TCW1 provides for a communications link connection (6).

Independently of how the communications link between the first and second end user units EUU1, EUU2 is actually established, measures for charging costs related to the establishing of the desired communications link and its use to the first end user unit EUU1 are contemplated. Here, the first telecommunications web site TCW1 appears as a calling party with respect to the first communications link unit N1. Usually this results in a situation wherein communications link related costs will be charged to the first telecommunications web site TCW1. In this case, the costs charged to the first telecommunications web site TCW1 will be forwarded to the first end user unit EUU1 possibly with additional service costs.

It is also possible that communications link related costs are directly charged from the first communications link unit N1 to the first end user unit EUU1. This can be accomplished comparable to a R-call known from telephone networks in response to respective data provided by the first telecommunications web site TCW1.

***In particular, the embodiment described with respect to Fig. 2 allows a call-by-call service for end user units for which usually no call-by-call service is provided (e.g. mobile tele*** ***phones) by means of a so-called call-back service. For a call-back service, the first telecommunications web site TCW1 obtains, in response to the access be the first end user unit EUU1, data identifying the second end user unit EUU2 to which a communications link is desired. Then, the first telecommunications web site TCW1 terminates the communications link established from the first end user unit EUU1 to the first telecommunications web site TCW1, e.g. by terminating a "#0800-service" call from the first end user unit EUU1. Thus, cost related to the communications link initially established from the first end user unit EUU1 to the first telecommunications web site TCW1 can be at least significantly reduced.***

***As an alternative it is contemplated that the first telecommunications web site TCW1 is just contacted by the first end user unit EUU1 but refuses an establishment of an actual communications link to the first end user unit EUU1 (this can be compared to the case when the handset of a regular telephone is not picked up in response to an incoming telephone call). Then, the first telecommunications web site TCW1 obtains the data identifying the second end user unit EUU2 without an establishment of a communications link between the first end user unit EUU1 and the first telecommunications web site TCW1. In such a manner, communications link costs related to the communications link between the first end user unit EUU1 and the telecommunications web site (TCW) can be avoided at least so far.***

***In both cases, the first telecommunications web site TCW1 knows both the first end user unit EUU1 and the second end user unit EUU2. On the basis of that information, the first telecommunications web site TCW1 can establish communications links to the first and second end user units EUU1, EUU2 as described above with respect to Fig. 2.***

Further to the above described options, here further options are contemplated. It is possible the first telecommunications web site TCW1 contacts the second end user unit EUU2 first and the first end user unit EUU1 subsequently, advantageously with virtually no waiting time for the second end user unit EUU2. Then, the first and second end user units EUU1, EUU2 are connected. If the second end user unit EUU2 can not be reached or does refuse an establishment of a communications link with the first end user unit EUU1, the first end user unit EUU1 can be informed correspondingly, e.g. by means of a SMS. Such information can also include an option for the first end user unit EUU1 to instruct the first telecommunications web site TCW1 to attempt a further establishment of a communications link to the second end user unit EUU2 later.

As a further option it is possible for the first telecommunications web site TCW1 connects to the first end user unit EUU1 first and connects to the second end user unit EUU2 subsequently. Possibly, the connection to the second end user unit EUU2 can be initiated upon accepting the communications link between the first telecommunications web site TCW1 to the first end user unit EUU1 thereby. Again, information can be provided to the first end user unit EUU1, e.g. in form of a SMS, if the second end user unit EUU2 can not be reached or does refuse an establishment of a communications link with the first end user unit EUU1.

Also, it is contemplated to inform the second end user unit EUU2 or a user thereof that the first end user unit EUU1 unsuccessfully tied to establish a communications link to the second end user unit EUU2 by e.g. by a SMS to the second EUU2 or a further end user unit of the user of the second end user unit EUU2.

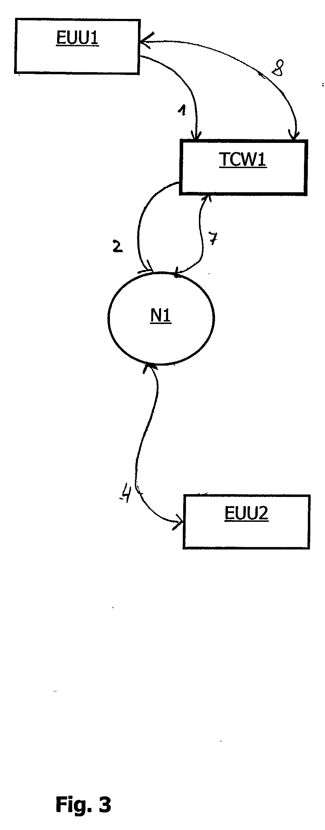

The embodiment shown in Fig. 3 differs from the embodiment shown in Fig. 2 in that respect that no communications link from the first communications link unit N1 to the first end user unit EUU1 is established. Rather, communications to and from the first end user unit EUU1 up to the first communications link unit N1 are executed via the first telecommunications web site TCW1.

Here, a connection of the communications link (3) between the first communications link unit N1 and the second end user unit EUU2 to the first end user unit EUU1 is accomplished by a communications link (7) from the first telecommunications web site TCW1 to the first communications link unit N1 and a communications link (8) between the first end user unit EUU1 and the first telecommunications web site TCW1. The latter communications link can be the same (1) as being used by the first end user unit EUU1 for accessing the first telecommunications web site TCW1 or, as illustrated, a further communications link originating from the first telecommunications web site TCW1 to the first end user unit EUU1.

A communications link (4) from the first communications link unit N1 to the second end user unit EUU2 will be established as set forth above with respect to Fig .1.

In this embodiment, billing of communications link costs to the first end user units EUU1 will be carried out under control of the first telecommunications web site TCW1.

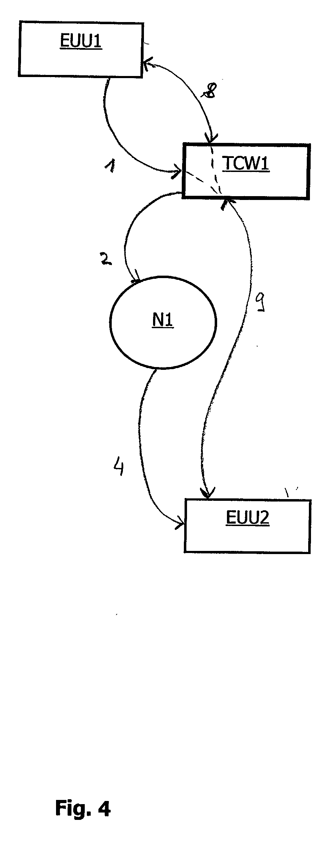

***Fig. 4 illustrates an embodiment wherein a communications link between the first end user unit EUU1 and the second end user unit EUU2 actually used for a communications there between is established via the first telecommunications web site TCW1. Up to that point where the first telecommunications web site TCW1 has contacted, in response to TCW-data from the first end user unit EUU1, the second end user unit EUU2 via the first communications link unit N1 this embodiment corresponds with the above-described embodiments (see Fig. 4:1, 2, 4).***

***In this embodiment, contacting the second end user unit EEU2 from the first telecommunications web site TCW1 does not necessarily include an establishment of a communications link from the first telecommunications web site TCW1 to the second end user unit EUU2. Rather, here it is sufficient that the first telecommunications web site TCW1 provides information characterizing the first end user unit EUU1 and*****/*****or its telecommunications web site, i.e. the first telecommunications web site TCW1, to the second end user unit EUU2. Then, upon contact from the first telecommunications web site TCW1 via the communica*** ***tions unit N1, the second end user unit EUU2 contacts the first telecommunications web site TCW1 on the basis of respective characterizing data. Such characterizing data include data uniquely characterizing the first telecommunications web site TCW1 via which the intended communications link to the fist end user unit EUU1 will be established. Further, it is possible that such characterizing data include data uniquely characterizing the first end user unit EUU1. In such a case the first telecommunications web site TCW1 will be contacted, e.g., by means of a so-called communications link forwarding according to which communications links to be established to the first end user unit EUU1 are routed or redirected to the first telecommunications web site TCW1. Then, the first telecommunications web site TCW1 will forward incoming communications links to a destination defined by the first end user unit EUU1, here the first end user unit EUU1 itself.***

***A respective communications link (9) between the second end user unit EUU2 and the first telecommunications web site TCW1 is continued to the first end user unit EUU1 by a respective communications link (8) or connected with a communications link (1) between the first end user unit EUU1 and the first telecommunications web site TCW1.***

Usually, as set forth above, the first telecommunications web site TCW1 is associated to the first end user unit EUU1 whereby only accesses from the first end user unit EUU1 to the first telecommunications web site TCW1 are allowed. This principle can be maintained for that embodiment by adapting, providing, operating the first telecommunications web site TCW1 such that upon the above contact by the second end user unit EUU2 no access occurs. Here, the first telecommunications web site TCW1 serves comparable to a network node connecting different parties. As an option, it is contemplated that for communications links according to the embodiment shown in Fig. 4, a, preferably restricted, access of the first telecommunications web site TCW1 by the second end user unit EUU2 is allowed. Advantageously, such a time restricted access possibility for the second end user unit EUU2 is controlled by the first telecommunications web site TCW1 automatically.

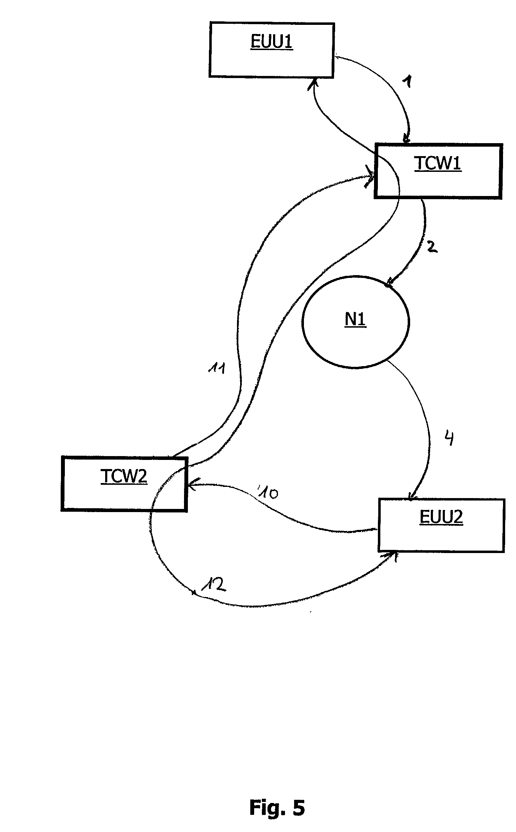

As described with respect to the embodiment shown in Fig. 4, the embodiment shown in Fig. 5 is comparable to the embodiments shown in Fig. 1 to 3 (see Fig. 5: 1, 2, 4). The embodiment shown in Fig. 5 differs from the previous embodiments in the regard that, upon establishing a communications link from the first communications link unit N1 to the second end user unit EUU2, the second end user unit EUU2 accesses its telecommunications web site, the telecommunications web site TCW2. In order to inform its telecommunications web site, a telecommunications web site TCW2 that a communications link is to be established between the first end user unit EUU1 and the second end user unit EUU2, the second end user unit EUU2 communicates TCW-data to the second telecommunications web site TCW2. These TCW-data include data indicating the desired communications link and, possibly, further data as described with respect to the TCW-data communicated from the first end user unit EUU1.

In response to the TCW-data from the second end user unit EUU2, the second telecommunications web site TCW2 contacts (11) the first telecommunications web site TCW1 such that a communications link (12) between the second end user unit EUU2 and the first telecommunications web site TCW1 is established via the second telecommunications web site TCW2. A connection (10) of the communications link between the second end user unit EUU2 and the second telecommunications web site TCW2 and a (the) communication link (8, 1) between the first end user unit EUU1 and the first telecommunications web site TCW1 can be carried out as described above.

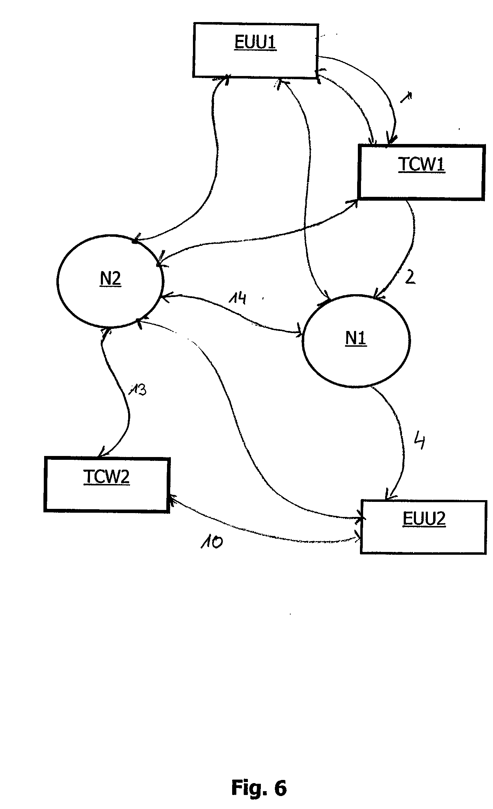

In contrast to the embodiment shown in Fig. 5, according to the embodiment shown in Fig. 6, the second telecommunications web site TCW2 of the second end user unit EUU2 connects (13) to a second communications link unit N2. For establishing a communications link (14) between the second communications link unit N2 and the second end user unit EUU2, the description given with respect to a communications link (3) between the first end user unit EUU1 and the first communications link unit N1 according to the embodiments of Fig. 1, 2 and 3 apply correspondingly.

Comparable to the above-described different communications links between the first communications link unit N1 and the second end user unit EUU2, communications links from the second communications link unit N2 to the first end user unit EUU1 are contemplated. This applies also to connections of communications links between the second communications link unit N2 and the first and second end user units EUU1, EUU2. In Fig. 6, such possible communications links are not indicated by reference numerals.

In this embodiment, it is further possible that a communications link between the first end user unit EUU1 and the second end user unit EUU2 includes a communications link (14) between the first and the second communications link units N1, N2.

For all embodiments described above, a so-called reverse charging option is contemplated. Reverse charging option refers, as used herein, to measures charging communications link related costs to a called party, in the given examples the second end user unit EUU2. Here, the charging/billing measures described with respect to the first end user unit EUU1 are carried out with respect to the second end user unit EUU2. Advantageously, the reverse charging option requires an acceptance by the second end user unit EUU2 that costs related to the communications link between the first and second end user units EUU1, EUU2 are charged to the second end user unit EUU2.

Having accepted a reverse charging, the embodiment shown in Fig. 6 enables the second end user unit EUU2 to select and establish a communications link on its own. In the other embodiments the first end user unit EUU1 and/or the first telecommunications web site TCW1 determines the communications link to be established to the second end user unit EUU2. Then, the second end user unit EUU2 having accepted a reverse charging has also to accept the communications link and its related costs. In contrast thereto, using the embodiment shown in Fig. 6, the second end user unit EUU2 and/or the second telecommunications web site TCW2 selects, determines, establishes a communications link actually used for communications with the first end user unit EUU1. This enables the called parted to, at least partially, control costs related to communications with a calling party.

Although above embodiments have been described separately, it is contemplated that features described for specific embodiments can be integrated in different embodiments, i.e. any feature of any embodiment can be implemented in any different embodiment. Moreover, although communications links between two end user units are described, communications links between more than two end user units, e.g. three, four, ten etc. end user units are contemplated. For example, a "calling" end user unit can communicate with two "called" end user units by respective communications links each thereof formed as described above.

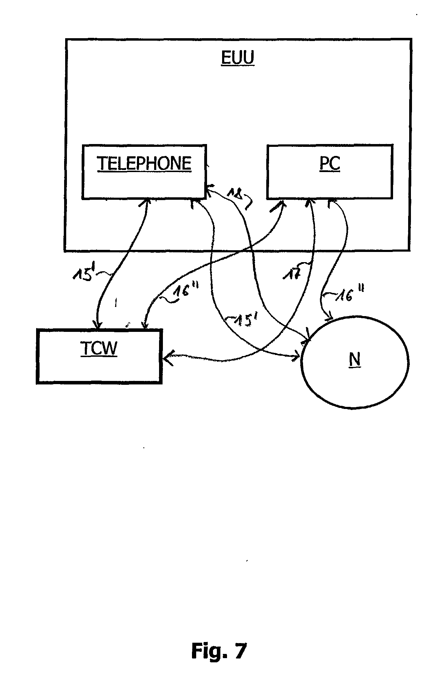

For the sake of simplicity, the above description has referred to end user units as integral units. Although it is possible that an end user unit is a single device or system, an exemplary embodiment of a combined end user unit is illustrated in Fig. 7.

Here, an end user unit EUU comprises a telephone and a personal computer. Both the telephone and the personal computer can independently serve as first and/ or second end user units in the above-described embodiments (see Fig. 7: 15', 16', 15", 16") or can be employed in combination. For example, the personal computer can be used to contact (17) an associated telecommunications web site TCW while the telephone will be employed for communicating via the established communications link (18) through the telecommunications web site TCW or a communications link unit N. Of course, a reverse utilization of the telephone and the personal computer is contemplated.

## Claims

1. Method for establishing a communications link between a first end user unit (EUU1) and a second end user unit (EUU2), comprising the steps of:
- communicating from the first end user unit (EUU1) to a first telecommunications web site (TCW1) first TCW-data, the first TCW-data activating the first telecommunications web site (TCW1),
- determining a first communications link unit (N1) by the first telecommunications web site (TCW), the first communications link unit (N1) providing communications links, and
- establishing a communications link between the first end user unit (EUU1) and the second end user unit (EUU2) via the first communications link unit (N1).

2. The method of claim 1, comprising the steps of:
- communicating second end user identifying data from first end user unit (EUU1), the second end user unit identifying data identifying the second end user unit (EUU2), and
- establishing the communications link between the first and second end user units (EUU1, EUU2) on the basis of the second end user unit identifying data.

3. The method of claim 2, wherein
the second end user unit identifying data is communicated to at least one of the first telecommunications web site (TCW1) and the first communications link unit (N1).

4. The method of one of the claims 1 to 3, wherein
- the communications link is established via the first telecommunications web site (TCW1), or
- a further communications link between the first and second end user units (EUU1, EUU2) is established via the first telecommunications web site (TCW1) so as to replace the established communications link.

5. The method according to one of the preceding claims, wherein
- the first end user unit (EUU1) comprises a first end user device (PC) for communicating the first TCW-data and a first user equipment (TELEPHONE), and
- the communications link is established between the first user equipment (TELEPHONE) and the second end user unit (EUU2).

6. The method according to one of the preceding claims, comprising in response to the establishing the communications link, the step of:
communicating from the second end user unit (EUU2) to a second telecommunications web site (TCW2) associated with the second end user unit (EUU2) second TCW-data, the second TCW-data activating the second telecommunications web site (TCW2).

7. The method of claim 6, comprising the steps of:
- determining a second communications link unit (N2) by the second telecommunications web site (TCW2), and
- establishing the communications link between the first and second end user units (EUU1, EUU2) via the second communications link unit (N2) or establishing a further communications link between the first and second end user units (EUU1, EUU2) via the second communications link unit (N2) so as to replace the established communications link.

8. The method of claim 6 or 7, wherein
- the communications link between the first and second end user unit (EUU1, EUU2) is established via the second telecommunications web site (TCW2), or
- a further communications link between the first and second end user units (EUU1, EUU2) is established via the second telecommunications web site (TCW2) so as to replace the established communications link.

9. The method of one of the preceding claims, wherein
utilized TCW-data are used for at least one of identification and authentification the respective end user unit (EUU1, EUU2) communicating TCW-data.

10. The method according to one of the preceding claims, wherein
utilized TCW-data include at least one of a number code, an alpha-numerical code, data representative of a communications link unit via which a communications link is to be established, data obtained from voice recognition, data being indicative of the respective end user unit (EUU1, EUU2) communicating TCW-data and data identifying a user of the respective end user unit (EUU1, EUU2) communicating TCW-data.

11. The method according to one of the preceding claims, wherein
utilized TCW-data are at least partially communicated by at least one of inputting TCW-data by at least one of a keyboard, a microphone, a touch screen, a pointing device, a computer, a browser software or a device for obtaining biometrical data and automatic data communications under control of the respective end user unit (EUU1, EUU2) communicating TCW-data.

12. The method of one of the preceding claims, wherein
costs related to the communications link between the first and second end user units (EUU1, EUU2) are accounted to the second end user unit (EUU2).

13. The method of one of the preceding claims, wherein
at least one of the first end user unit (EUU1) and the second end user unit (EUU2) comprises a telephone and at least one of the utilized communications link units provides for PSTN-network based communications.

14. An end user unit (EUU1) for communicating with a receiving end user unit (EUU2), the end user unit (EUU1) comprising:
- at least one unit being adapted to communicate first TCW-data to a first telecommunications web site (TCW1) associated to the end user unit (EUU1), the first TCW-data activating the first telecommunications web site (TCW1), and
- at least one unit for communicating with a receiving end user unit (EUU2) via a communications link via a first communications link unit (N1) determined by the first telecommunications web site (TCW).

15. The end user unit of claim 14, being adapted to be operated according to the steps of one of the claims 1 to 13 as far as relating to an end user unit.

16. A telecommunications web site (TCW1) for providing a communications link between a first end user unit (EUU1) the telecommunications web site (TCW1) is associated to and a second end user unit (EUU2), being adapted to:
- to receive from the first end user unit (EUU1) first TCW-data, the first TCW-data activating the first telecommunications web site (TCW1),
- determining a first communications link unit (N1) by the first telecommunications web site (TCW), the first communications link unit (N1) providing communications links, and
- to initiate an establishment of a communications link between the first end user unit (EUU1) and the second end user unit (EUU2) via the first communications link unit (N1).

17. The telecommunications web site (TCW1) of claim 16, being adapted to be operated according to the steps of one of the claims 1 to 13 as far as relating to a telecommunications web site.

18. A software program product for an end user unit (EUU1) for initiating a communications link between an end user unit (EUU1) and a receiving end user unit (EUU2), comprising program code portions for carrying out the steps of one of the claims 1 to 13 as far as relating to an end user unit.

19. A software program product, comprising
program code portions for carrying out the steps of one of the claims 1 to 13.

20. The software program product of claim 18 or 19, being
stored on a computer readable storage medium or stored in a storage device for a computer.

21. A communications environment comprising at least one of the features of:
- being adapted to be operated according to the steps of one of the claims 1 to 13 and
- comprising the end user unit (EUU1) according to claim 14 or 15, and
- comprising the telecommunications web site (TCW1) according to claim 16 or 17, and
- comprising the software program product according to one of the claims 18 or 20.
